# EUROPEAN PATENT APPLICATION

(11) **EP 4 400 454 A1**
(43) Date of publication of application: **17.07.2024**
(21) Application number: 22867148.3
(22) Date of filing: 15.08.2022
(51) Int. Cl.: B65G 1/137

(54) **SYSTEM**

(30) Priority: 07.09.2021 JP 2021145319
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/030907
(87) International publication number: WO 2023/037826

(57) **Abstract**

A System according to an embodiment includes a sorter and an automatic conveying device. The sorter includes a first tray and an introducing mechanism. The automatic conveying device includes a gripping mechanism, a driving mechanism and a processor. The first tray onto which an article is to be loaded. The introducing mechanism is configured to introduce the article from the first tray into a Container. The gripping mechanism is configured to grip the Container. The driving mechanism is configured to move the gripping mechanism in a vertical direction. The processor is configured to cause the gripping mechanism to acquire the Container from the sorter, and to cause the gripping mechanism and the driving mechanism to störe the Container in a rack for storing the Containers in a height direction.

## Description

### FIELD

Embodiments described herein relate generally to a System.

### BACKGROUND

A System is provided for depositing an article into a chute using a sorter. Such a System sorts the article through the chute into a Container depending on the destination of the article, etc.

In a conventional System, Containers into which articles have been introduced are two-dimensionally arranged in a predetermined area in a warehouse or the like. Therefore, the System needs to secure a large space for storing the Containers.

### CITATION LIST

### PATENT LITERATURE

Patent Literature 1: Jpn. Pat. Appln. KOKAI Publication No. 2020-132330

### SUMMARY

### TECHNICAL PROBLEM

To solve the problem, a System capable of efficiently storing Containers in which articles have been put is provided.

### SOLUTION TO PROBLEM

A System according to an embodiment includes a sorter and an automatic conveying device. The sorter includes a first tray and an introducing mechanism. The automatic conveying device includes a gripping mechanism, a driving mechanism and a processor. The first tray onto which an article is to be loaded. The introducing mechanism is configured to introduce the article from the first tray into a Container. The gripping mechanism is configured to grip the Container. The driving mechanism is configured to move the gripping mechanism in a vertical direction. The processor is configured to cause the gripping mechanism to acquire the Container into which the article has been introduced from the sorter, and to cause the gripping mechanism and the driving mechanism to störe the Container into which the article has been introduced from the sorter in a rack for storing the Containers in a height direction.

### BRIEF DESCRIPTION OF THE DRAWING(S)

FIG. 1 is a block diagram showing a configuration example of a sorting System according to a first embodiment.
FIG. 2 is a top view showing an Installation example of a tote according to the first embodiment.
FIG. 3 is a side view showing an Installation example of a tote according to the first embodiment.
FIG. 4 is a diagram showing an example of a rack according to the first embodiment.
FIG. 5 is a block diagram showing a configuration example of a control System of a sorting System according to the first embodiment.
FIG. 6 is a block diagram showing a configuration example of a sorting control device according to the first embodiment.
FIG. 7 is a block diagram showing a configuration example of a sorter control device according to the first embodiment.
FIG. 8 is a block diagram showing a configuration example of a CTU control device according to the first embodiment.
FIG. 9 is a side view of a CTU according to the first embodiment.
FIG. 10 is a block diagram showing a configuration example of the CTU according to the first embodiment.
FIG. 11 is a diagram showing a configuration example of sorting destination Information according to the first embodiment.
FIG. 12 is a diagram showing an Operation example of the sorting System according to the first embodiment.
FIG. 13 is a diagram showing an Operation example of the sorting System according to the first embodiment.
FIG. 14 is a flowchart showing an Operation example of the sorting control device according to the first embodiment.
FIG. 15 is a flowchart showing an Operation example of the sorter control device according to the first embodiment.
FIG. 16 is a flowchart showing an Operation example of the CTU control device according to the first embodiment.
FIG. 17 is a diagram showing an Operation example of a sorting System according to a second embodiment.
FIG. 18 is a flowchart showing an Operation example of a sorting control device according to the second embodiment.
FIG. 19 is a flowchart showing an Operation example of a sorter control device according to the second embodiment.
FIG. 20 is a flowchart showing an Operation example of a CTU control device according to the second embodiment.

### DETAILED DESCRIPTION

Hereinafter, embodiments will be described with reference to the drawings .

A sorting System according to an embodiment sorts an article to a sorting destination. The sorting System, using a sorter and a tall case transfer robot (case transfer unit (CTU) ), introduces an article into a chute corresponding to the sorting destination. The sorting System introduces an article into a tote through a chute. In addition, the sorting System puts a Container into which the article has been introduced on the CTU and Stores the Container on the rack .

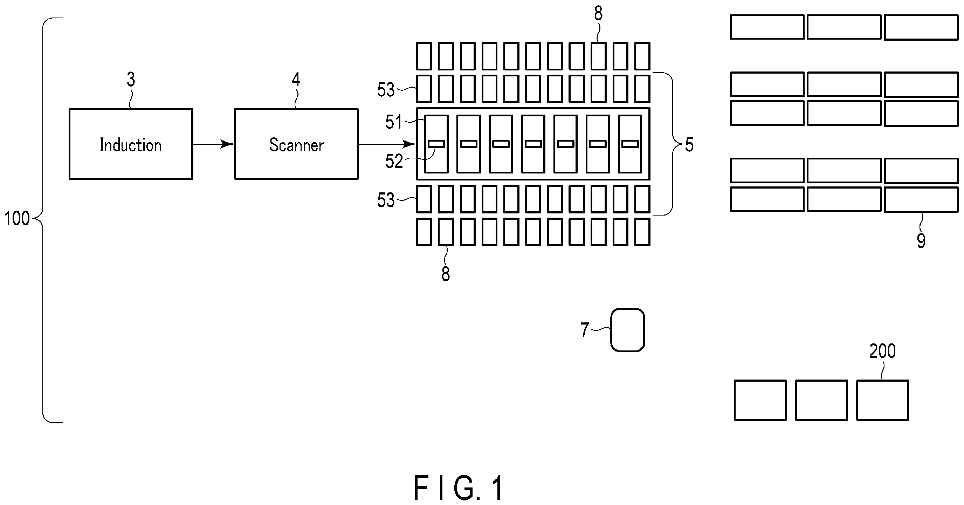

FIG. 1 shows a configuration example of a sorting System 100 according to an embodiment. As shown in FIG. 1, the sorting System 100 includes an induction 3, a Scanner 4, a sorter 5, a plurality of CTUs 7, a plurality of totes 8, a plurality of racks 9, and a plurality of roll box pallets 200.

The sorting System 100 conveys the article to the induction 3, the Scanner 4, and the sorter 5 in this Order.

The induction 3 introduces the article to the sorter 5. The induction 3 receives the article introduced by an operator, a robot or the like. The induction 3 conveys the introduced article using a conveyor or the like and introduces the article into the sorter 5.

The Scanner 4 reads a code affixed to the article. For example, the Scanner 4 is disposed at a position where the code of the article conveyed to the induction 3 can be captured. The Scanner 4 reads the code from the article which is being conveyed.

The code is obtained by encoding an ID for identifying the article. The Scanner 4 may read a character string of an ID affixed to the article by character recognition Processing (optical character recognition (OCR) processing) or the like.

The sorter 5 sorts the introduced article. The sorter 5 includes a tray 51 (first tray), a pusher 52, a chute 53, and the like.

The sorter 5 loads the article onto the tray 51 and conveys the tray. The tray 51 moves in a predetermined direction (right direction in FIG. 1).

The sorter 5 pushes out the article from the tray 51 to a predetermined chute 53 by using the pusher 52 at a timing when the tray 51 arrives in front of the chute 53.

The pusher 52 (introducing mechanism) introduces the article loaded onto the tray 51 into the tote 8. The pusher 52 pushes out the article to a specific chute 53 according to the sorting destination of the article. The pusher 52 is positioned in a direction opposite to a direction in which the induction 3 pushes out the article before placing the article on the tray 51.

A plurality of chutes 53 are arranged in parallel with the direction in which the tray 51 moves. The chute 53 is a conveying path through which the article pushed out from the tray 51 passes. The chute 53 is formed in a slope shape extending downward from the tray 51.

The sorter 5 introduces the article from the chute 53 to the tote 8.

The sorter 5 may be constituted by the tray 51 and the pusher 52, may be constituted by a cross belt, may be constituted by an AGV, or may be constituted by other mechanisms. Here, the sorter 5 including the tray 51 and the pusher 52 will be described as an example.

The tote 8 is a Container into which articles are introduced from the sorter 5. A plurality of totes 8 are disposed in proximity to the chutes 53. The totes 8 are positioned so that they can receive articles passing through the chutes 53. Here, the tote 8 is formed in a box shape whose upper surface is opened.

The roll box pallet 200 is a Container for storing the totes 8 that are dispensed. For example, the roll box pallet 200 is a movable structure in a state where the tote 8 is stored.

The CTU 7 is an automatic conveying device that loads and conveys articles. The CTU 7 acquires the tote 8 into which the articles have been introduced. Upon acquisition of the tote 8, the CTU 7 moves to a rack 9. When moved to the rack 9, the CTU 7 Stores the tote 8 in the rack 9.

The CTU 7 will be described in detail later.

The rack 9 Stores a plurality of totes 8. The rack 9 will be described in detail later.

Next, an Installation example of the tote 8 will be described.

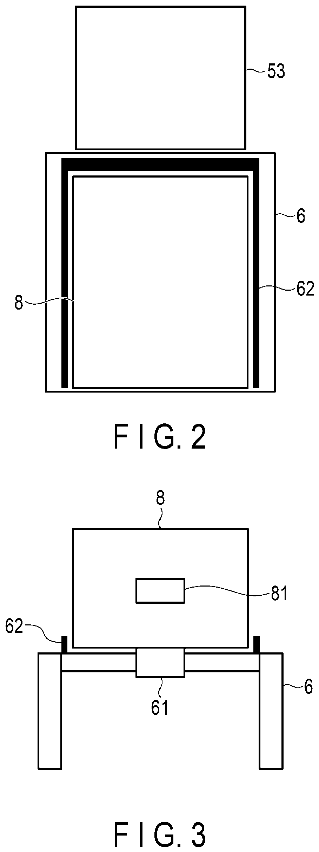

FIG. 2 is a top view showing an Installation example of the tote 8. FIG. 3 is a side view showing an Installation example of the tote 8.

As shown in FIGS. 2 and 3, the sorting System 100 includes a loading table 6 (first loading table) onto which the tote 8 is loaded.

The loading table 6 Supports the tote 8 at a predetermined height at which the tote 8 can receive articles from the chute 53 (a position at which the tote 8 can receive articles introduced from the pusher 52).

The loading table 6 includes a code 61, a guide 62, and the like.

The code 61 is a code obtained by encoding an identifier indicating the corresponding chute 53 (or loading table 6). For example, the code 61 is a bar code, a two-dimensional code, or the like. The code 61 is formed on a surface opposite to a surface that faces the chute 53.

The guide 62 is a guide for maintaining the Position of the tote 8. The guide 62 is formed to have a predetermined height. The guide 62 includes a first side between the chute 53 and the tote 8 and two second sides perpendicular to the first side. That is, the guide 62 is formed in a rectangular shape whose side opposite to the first side is open.

The loading table 6 may have a structure in which the tote 8 can be further stored in a lower portion thereof.

The tote 8 comprises a code 81 or the like.

The code 81 is a code obtained by encoding an identifier indicating the tote 8. For example, the code 81 is a bar code, a two-dimensional code, or the like. The code 81 is formed on a surface opposite to a surface that faces the chute 53.

Next, the rack 9 will be described.

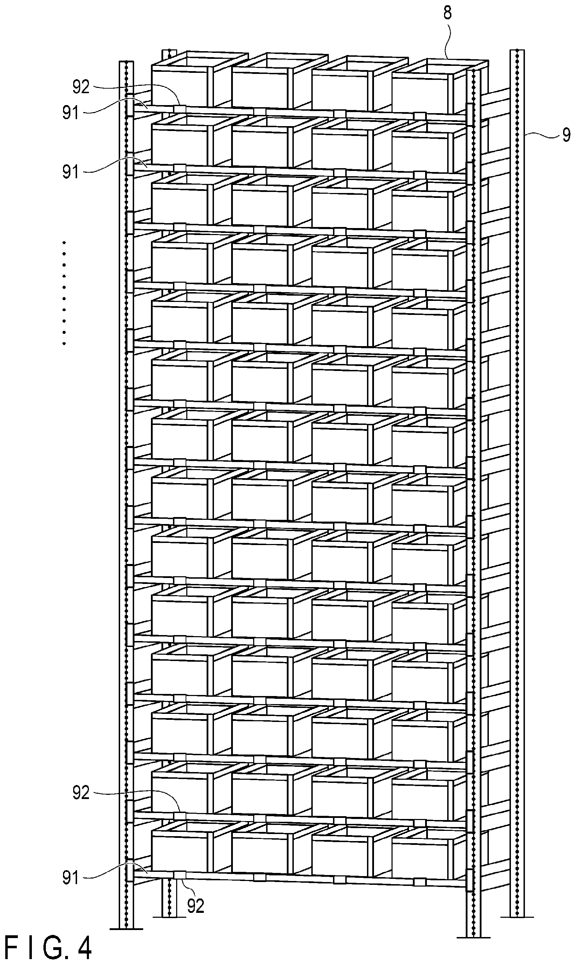

FIG. 4 shows a structural example of the rack 9.

The rack 9 is formed to have a predetermined height. The rack 9 has a structure in which the CTU 7 can acquire the tote therefrom or störe the tote 8 therein.

As shown in FIG. 4, the rack 9 includes a plurality of rack stages 91 formed one above another in the height direction.

The rack stage 91 has a depth that allows the tote 8 to be loaded. The rack stage 91 has a predetermined width. The rack stage 91 loads totes 8 in the width direction. Here, the rack stage 91 Stores four totes 8 in the width direction. The rack stage 91 is open in the front direction (or the back direction) .

A code 92 is a code obtained by encoding an identifier indicating a rack position and a tote position. For example, the code 92 is a bar code, a two-dimensional code, or the like, and is affixed to a rack plate corresponding to a position where the tote is located.

The rack 9 Stores the totes 8 arranged one above another in the height direction on the rack stages 91.

Next, a control System of the sorting System 100 will be described.

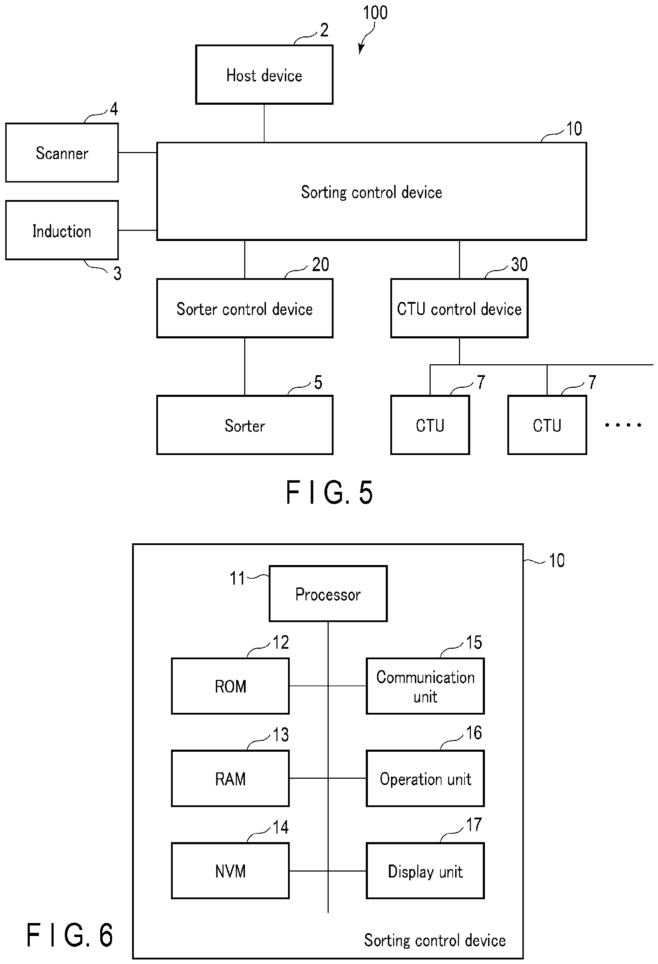

FIG. 5 illustrates the control System of the sorting System 100. As shown in FIG. 5, the sorting System 100 includes the induction 3, the Scanner 4, the sorter 5, a host device 2, the CTUs 7, a sorting control device 10, a sorter control device 20, a CTU control device 30, and the like.

The sorting control device 10 is connected to the induction 3, the Scanner 4, the host device 2, the sorter control device 20, and the CTU control device 30. The sorter control device 20 is connected to the sorter 5. Fürther, the CTU control device 30 is connected to the CTUs 7 .

The host device 2 transmits sorting destination Information indicating an article and a sorting destination (destination) of the article to the sorting control device 10. The sorting destination Information will be described in detail later.

For example, the host device 2 is a warehouse management System (WMS). For example, the host device 2 is constituted by a PC or the like.

The sorting control device 10 Controls the sorter 5 and the CTUs 7 according to the sorting destination Information from the host device 2. The sorting control device 10 Controls the sorter 5 through the sorter control device 20. The sorting control device 10 also Controls the CTUs 7 through the CTU control device 30. For example, the sorting control device 10 is a warehouse execution System (WES). The sorting control device 10 will be described in detail later.

The sorter control device 20 Controls the sorter 5 in accordance with a control Signal from the sorting control device 10. The sorter control device 20 functions as a Controller for the sorter 5. For example, the sorter control device 20 is a warehouse control System (WCS). The sorter control device 20 will be described in detail later.

The CTU control device 30 Controls the CTUs 7 according to a control Signal from the sorting control device 10. The CTU control device 30 functions as a Controller for the CTUs 7. For example, the CTU control device 30 is a WCS. The CTU control device 30 will be described in detail later.

Next, the sorting control device 10 will be described.

FIG. 6 is a block diagram showing a configuration example of the sorting control device 10. As shown in FIG. 6, the sorting control device 10 includes a processor 11, a ROM 12, a RAM 13, an NVM 14, a communication unit 15, an Operation unit 16, a display unit 17, and the like.

The processor 11, the ROM 12, the RAM 13, the NVM 14, the communication unit 15, the Operation unit 16, and the display unit 17 are connected to one another via a bus or the like.

The sorting control device 10 may include other configurations as necessary in addition to the configuration illustrated in FIG. 6, or a specific configuration may be excluded from the sorting control device 10.

The processor 11 has a function of Controlling the Operation of the sorting control device 10. The processor 11 may include an internal cache, various interfaces, etc. The processor 11 realizes various processing by executing programs stored in advance in an internal memory, the ROM 12, or the NVM 14.

Note that some of the various functions realized by the execution of the programs by the processor 11 may be realized by a hardware Circuit. In this case, the processor 11 Controls the functions performed by the Hardware Circuit.

The ROM 12 is a non-volatile memory in which a control program and control data have been stored in advance. The control program and control data stored in the ROM 12 are incorporated in advance according to the specifications of the sorting control device 10.

The RAM 13 is a volatile memory. The RAM 13 temporarily Stores Information that is being processed by the processor 11. The RAM 13 Stores various application programs based on instructions from the processor 11. The RAM 13 may störe data necessary for executing the application programs, execution results of the application programs, and the like.

The NVM 14 is a data-writable and rewritable non-volatile memory. The NVM 14 is constituted by, for example, a hard disk drive (HDD), a solid state drive (SSD), a flash memory, or the like. The NVM 14 Stores a control program, an application, and various kinds of data according to the Operation purpose of the sorting control device 10.

The communication unit 15 is an interface for communicating with the induction 3, the Scanner 4, the host device 2, the sorter control device 20, the CTU control device 30, and the like. For example, the communication unit 15 is an interface for transmitting and receiving data to and from the induction 3, the Scanner 4, the host device 2, the sorter control device 20, the CTU control device 30, and the like via a network. The communication unit 15 is connected to the sorter 5 via the sorter control device 20. The communication unit 15 is also connected to the CTUs 7 via the CTU control device 30. For example, the communication unit 15 is an interface for supporting wired or wireless local area network (LAN) connection.

The communication unit 15 functions as an interface for Controlling the sorter 5 and the CTUs 7.

The communication unit 15 may include an interface for communicating with the induction 3, an interface for communicating with the Scanner 4, an interface for communicating with the host device 2, an interface for communicating with the sorter control device 20, and an interface for communicating with the CTU control device 30.

The Operation unit 16 receives inputs of various operations from the operator. The Operation unit 16 transmits Signals indicating the input operations to the processor 11. The Operation unit 16 may be constituted by a touch panel.

The display unit 17 displays image data from the processor 11. For example, the display unit 17 is constituted by a liquid crystal monitor. In the case where the Operation unit 16 is constituted by a touch panel, the display unit 17 may be formed integrally with the Operation unit 16.

Next, the sorter control device 20 will be described.

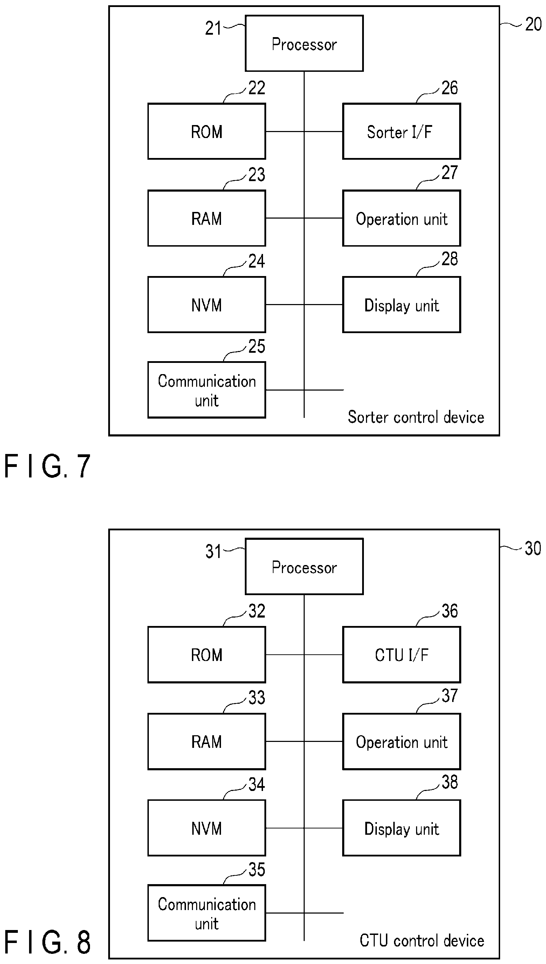

FIG. 7 is a block diagram showing a configuration example of the sorter control device 20. As shown in FIG. 7, the sorter control device 20 includes a processor 21, a ROM 22, a RAM 23, an NVM 24, a communication unit 25, a sorter interface 26, an Operation unit 27, a display unit 28, and the like.

The processor 21, the ROM 22, the RAM 23, the NVM 24, the sorter interface 26, the communication unit 25, the Operation unit 27, and the display unit 28 are connected to one another via a data bus or the like.

The sorter control device 20 may include other configurations as necessary in addition to the configuration illustrated in FIG. 7, or a specific configuration may be excluded from the sorter control device 20.

The processor 21 has a function of Controlling the entire Operation of the sorter control device 20. The processor 21 may include an internal cache, various Interfaces, and the like. The processor 21 realizes various Processing by executing programs stored in advance in an internal memory, the ROM 22, or the NVM 24.

Note that some of the various functions realized by the processor 21 executing the programs may be realized by a Hardware Circuit. In this case, the processor 21 Controls the functions performed by the Hardware Circuit.

The ROM 22 is a non-volatile memory in which control programs and control data have been stored in advance. The control programs and control data stored in the ROM 22 are incorporated in advance according to the specifications of the sorter control device 20.

The RAM 23 is a volatile memory. The RAM 23 temporarily Stores data that is being processed by the processor 21, etc. The RAM 23 Stores various application programs based on instructions from the processor 21. The RAM 23 may störe data necessary for executing the application programs, execution results of the application programs, and the like.

The NVM 24 is a data-writable and rewritable non-volatile memory. The NVM 24 is constituted by, for example, an HDD, an SSD, a flash memory, or the like. The NVM 24 Stores a control program, an application, and various kinds of data according to the Operation purpose of the sorter control device 20.

The communication unit 25 is an interface for communicating with the sorting control device 10 and the like. For example, the communication unit 25 is an interface for transmitting and receiving data to and from the sorting control device 10 and the like through a network. For example, the communication unit 25 is an interface that supports a wired or wireless LAN connection.

The sorter interface 26 is an interface for communicating with the sorter 5.

The Operation unit 27 receives input of various operations from the operator. The Operation unit 27 transmits Signals indicating the input operations to the processor 21. The Operation unit 27 may be constituted by a touch panel.

The display unit 28 displays image data from the processor 21. For example, the display unit 28 is constituted by a liquid crystal monitor. In a case where the Operation unit 27 is constituted by a touch panel, the display unit 28 may be formed integrally with the Operation unit 27.

The communication unit 25 and the sorter interface 26 may be integrally formed.

The processor 21 Controls the sorter 5 in accordance with a control Signal from the sorting control device 10. For example, the processor 21 causes the sorter 5 to sort a predetermined article into a predetermined chute. For example, the processor 21 pushes out the article to the chute at a timing when the article reaches the chute.

Next, the CTU control device 30 will be described.

FIG. 8 is a block diagram showing a configuration example of the CTU control device 30. As shown in FIG. 8, the CTU control device 30 includes a processor 31, a ROM 32, a RAM 33, an NVM 34, a communication unit 35, a CTU interface 36, an Operation unit 37, a display unit 38, and the like.

The processor 31, the ROM 32, the RAM 33, the NVM 34, the CTU interface 36, the communication unit 35, the Operation unit 37, and the display unit 38 are connected to one another via a data bus or the like.

The CTU control device 30 may include other conf igurations as necessary in addition to the configuration illustrated in FIG. 8, or a specific configuration may be excluded from the CTU control device 30.

The processor 31 has a function of Controlling the entire Operation of the CTU control device 30. The processor 31 may include an internal cache, various interfaces, etc. The processor 31 realizes various processing by executing programs stored in advance in the internal memory, the ROM 32, or the NVM 34 .

Note that some of the various functions realized by the processor 31 executing the programs may be realized by a hardware Circuit. In this case, the processor 31 Controls the functions performed by the hardware Circuit.

The ROM 32 is a non-volatile memory in which a control program, control data, etc. are stored in advance. The control program and control data stored in the ROM 32 are incorporated in advance according to the specif ications of the CTU control device 30.

The RAM 33 is a volatile memory. The RAM 33 temporarily Stores data being processed by the processor 31. The RAM 33 Stores various application programs based on instructions from the processor 31. In addition, the RAM 33 may Store data necessary for executing the application programs, execution results of the application programs, etc.

The NVM 34 is a non-volatile memory capable of writing and rewriting data. The NVM 34 is constituted by, for example, an HDD, an SSD, a flash memory, or the like. The NVM 34 Stores a control program, an application, and various kinds of data according to the Operation purpose of the CTU control device 30. For example, the NVM 34 Stores a database regarding inventory locations of the totes 8.

The communication unit 35 is an interface for communicating with the sorting control device 10 and the like. For example, the communication unit 35 is an interface for transmitting and receiving data to and from the sorting control device 10 and the like through a network. For example, the communication unit 35 is an interface that Supports a wired or wireless LAN connection.

The CTU interface 36 is an interface for communicating with the CTUs 7. The CTU interface 36 connects to the CTUs 7 in a wired or wireless männer. For example, the CTU interface 36 may support a wireless LAN connection.

The Operation unit 37 receives input of various operations from the operator. The Operation unit 37 transmits Signals indicating the input operations to the processor 31. The Operation unit 37 may be constituted by a touch panel .

The display unit 38 displays image data from the processor 31. For example, the display unit 38 is constituted by a liquid crystal monitor. In a case where the Operation unit 37 is constituted by a touch panel, the display unit 38 may be formed integrally with the Operation unit 37.

The communication unit 35 and the CTU interface 36 may be integrally formed.

The processor 31 Controls the CTU 7 in accordance with a control Signal from the sorting control device 10. For example, the processor 31 causes the CTU 7 to move to a predetermined position. The processor 31 also causes the CTU 7 to acquire the tote 8. The processor 31 also causes the CTU 7 to set the tote 8.

Next, the CTU 7 will be described.

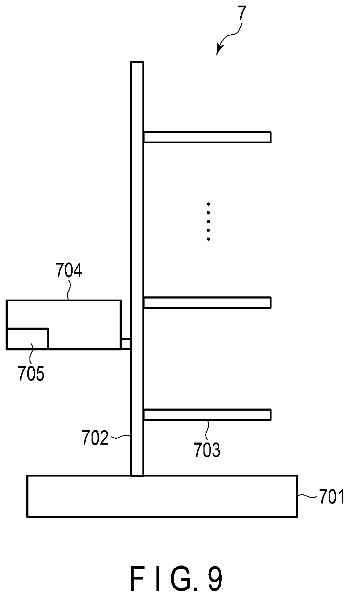

FIG. 9 is a side view of the CTU 7.

As shown in FIG. 9, the CTU 7 comprises a base 701. The base 701 functions as a moving mechanism that moves the entire CTU 7. The base 701 includes a tire 70 which will be described later. The base 701 may include a camera or the like that reads a code or the like affixed to the floor surface.

Fürther, a member 702 extending upward is formed on the base 701. For example, the member 702 includes two rod-like members extending upward and a rod-like member formed across the two rod-like members. That is, the member 702 is formed in a ladder shape.

A plurality of rear trays 703 (second trays) are formed on the member 702. The rear trays 703 are plate-like members extending horizontally from the member 702. The rear trays 703 load the totes 8. The rear tray 703 loads one tote 8.

Here, eight rear trays 703 are formed on the member 702. The number of the rear trays 703 is not limited to a specific number.

A shuttle unit 704 (gripping mechanism) is formed on the member 702. The shuttle unit 704 is formed in a direction opposite to the rear tray 703 with respect to the member 702. The shuttle unit 704 can be moved up and down along the member 702 by a drive unit 76 or the like to be described later.

The shuttle unit 704 grips a tote 8 on the front side (left side in FIG. 9). The shuttle unit 704 loads the gripped tote 8 into one of the rear trays 703.

The shuttle unit 704 also grips a tote 8 loaded onto one of the rear trays 703. The shuttle unit 704 releases the gripped tote 8 at the front.

The shuttle unit 704 can acquire the tote 8 from each rack stage 91 of the rack 9 and the loading table 6. The shuttle unit 704 can also set the tote 8 to each rack stage 91 of the rack 9 and the loading table 6.

The shuttle unit 704 includes a camera 705. The camera 705 is disposed so as to photograph the front side. The camera 705 photographs the code 61 of the loading table 6, the code 81 of the tote 8, the code 92 of the rack 9, or the like. The camera 705 may be provided with lighting or the like.

Next, a control System of the CTU 7 will be described.

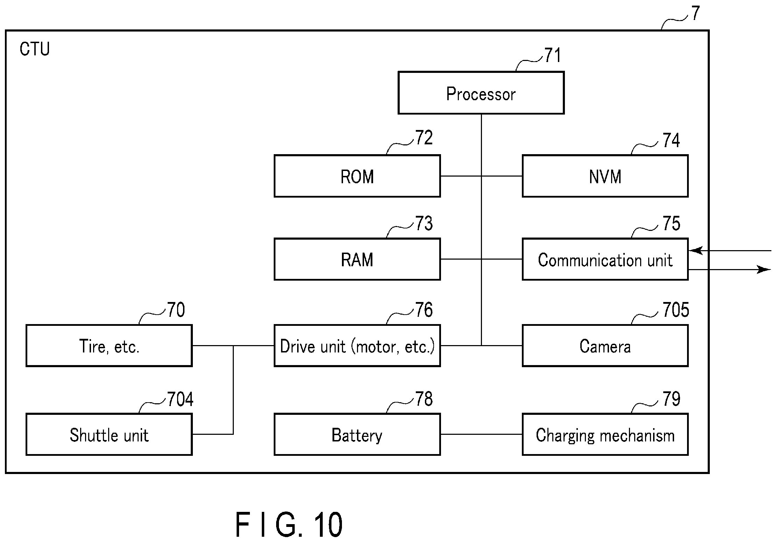

FIG. 10 is a block diagram showing a configuration example of the CTU 7. The CTU 7 includes a processor 71, a ROM 72, a RAM 73, an NVM 74, a communication unit 75, a drive unit 76 (driving mechanism) , a battery 78, a charging mechanism 79, a tire 70, the shuttle unit 704, the camera 705, and the like.

The processor 71 has a function of Controlling the entire Operation of the CTU 7. The processor 71 may include an internal cache, various interfaces, and the like. The processor 71 realizes various processing by executing programs stored in advance in an internal memory, the ROM 72, or the NVM 74.

For example, the processor 71 is a central processing unit (CPU) . The processor 71 may be implemented by hardware such as a large scale Integration (LSI), an application specific integrated Circuit (ASIC) , or a field-programmable gate array (FPGA) .

The ROM 72 is a non- transitory Computer- readable storage medium and Stores the af orementioned programs. Also, the ROM 72 Stores data for use by the processor 71 to perform various processing, as well as a variety of setting valu.es, etc. The RAM 73 is a memory for data read and data write. The RAM 73 is utilized as a so-called work area for storing data to be temporarily used by the processor 71 to perform various processing.

The NVM 74 is a non- transitory Computer- readable storage media and may störe the af orementioned programs. In addition, the NVM 74 Stores data to be used by the processor 71 when performing various types of processing, data generated by the processing performed by the processor 71, or various setting values, and the like.

The communication unit 75 is an interface that transmits and receives data to and from the CTU control device 30 or the like through a wireless LAN access point or the like. For example, the communication unit 75 supports a wireless LAN connection.

The drive unit 76 drives the tire 70. The drive unit 76 is a motor or the like that rotates the tire 70, and rotates or stops the motor based on a drive Signal Output from the processor 71. The power of the motor is transmitted to the tire 70. The CTU 7 is moved to a target Position by the power from the motor.

The drive unit 76 also drives the shuttle unit 704. For example, the drive unit 76 moves the shuttle unit 704 vertically. In addition, the drive unit 76 causes the shuttle unit 704 to perform the gripping Operation. The drive unit 76 is a motor or the like that drives the shuttle unit 704.

The drive unit 76 may include a mechanism for driving the tire 70 and a mechanism for driving the shuttle unit 704 .

The battery 78 supplies necessary electric power to the drive unit 76 and the like. The charging mechanism 79 is a mechanism that connects a charging Station and the battery 78, and the battery 78 is charged with electric power supplied from the charging Station through the charging mechanism 79.

The tire 70 is rotated by power from the drive unit 76. The CTU 7 moves forward or backward, or changes direction or the like by rotation of the tire 70.

The CTU 7 may include other configurations as necessary in addition to the configuration illustrated in FIG. 9 and FIG. 10, or a specific configuration may be excluded from the CTU 7.

The processor 71 performs processing such as calculation and control necessary for acceleration, deceleration, stopping, changing direction, and Operation of the shuttle unit 704. The processor 71 executes a program stored in the ROM 72, the NVM 74, or the like based on a control Signal from the CTU control device 30 or the like, thereby generating a drive signal and outputting the drive signal to each unit.

The processor 71 of the CTU 7 Outputs a drive signal corresponding to the control signal transmitted from the CTU control device 30. As a result, the CTU 7 moves from the current position to a predetermined position and performs operations such as gripping, releasing, and loading of the tote 8.

Next, functions realized by the sorting control device 10 will be described. The functions realized by the sorting control device 10 are realized by the processor 11 executing the programs stored in an internal memory, the ROM 12, the NVM 14, or the like.

First, the processor 11 has a function of acquiring sorting destination Information.

As described above, the sorting destination Information indicates the sorting destination of the article.

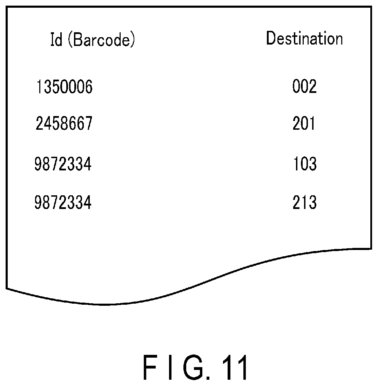

FIG. 11 shows a configuration example of the sorting destination Information. As shown in FIG. 11, the sorting destination Information includes a record in which "ID" and "Destination" are associated with each other.

"ID" is an identifier for specifying an article to be sorted. In this example, "ID" indicates a numerical value.

"Destination" indicates a destination of the corresponding article. "Destination" corresponds to the tote 8 in which the article is stored and the rack 9 in which the tote 8 is stored. That is, "Destination" is Information with which the processor 11 of the sorting control device 10 can specify the tote 8 into which the article is to be introduced and the rack 9 in which the tote 8 is to be stored.

For example, "Destination" may be Information indicating an address (or a part of an address).

The configuration of the sorting destination Information is not limited to a specific configuration.

The processor 11 receives the sorting destination Information from the host device 2 through the communication unit 15. The processor 11 may transmit a request for the sorting destination Information to the host device 2 through the communication unit 15.

The processor 11 has a function of generating one-pass sorting Information and one-pass arrangement plan Information based on the sorting destination Information.

Here, the processor 11 causes the sorter 5 to introduce articles into the chute 53 and causes the CTU 7 to störe in the rack 9 the tote 8 into which the articles have been introduced. That is, the processor 11 introduces the articles into the sorter 5 once to sort the articles (one-pass sorting).

The one-pass sorting Information is Information for specifying the chute 53 into which the articles are to be introduced. For example, the one-pass sorting Information includes the identifier of the article and the chute 53 into which the article is introduced in association with each other.

The one-pass arrangement plan Information is Information for specifying the rack 9 for storing the tote 8 into which the article has been introduced from the chute 53. For example, in the one-pass arrangement plan Information, the identifier of the tote 8, the identifier of the loading table 6 onto which the tote 8 is loaded, and the rack 9 for storing the tote 8 are included in association with one another.

Upon generating the one-pass sorting Information, the processor 11 transmits the one-pass sorting Information to the sorter control device 20 through the communication unit 15.

Upon generating the one-pass arrangement plan Information, the processor 11 transmits the one-pass arrangement plan Information to the CTU control device 30 through the communication unit 15.

Then, the processor 11 Starts introducing the articles into the sorter 5 using the induction 3.

Next, functions realized by the sorter control device 20 will be described. The functions realized by the sorter control device 20 are realized by the processor 21 executing the programs stored in an internal memory, the ROM 22, the NVM 24, or the like.

The processor 21 has a function of introducing the articles into the chute 53 based on the one-pass sorting Information.

First, the processor 21 receives the one-pass sorting Information from the sorting control device 10 through the communication unit 25. Upon receiving the one-pass sorting Information, the processor 21 generates sorting designation Information for designating the chute 53 into which each article is to be introduced based on the one-pass sorting Information.

Upon generating the sorting designation Information, the processor 21 causes the sorter 5 to load the article introduced from the induction 3 onto the tray 51. Upon loading of the article by the sorter 5 onto the tray 51, the processor 21 acquires the ID read from the article by the Scanner 4.

For example, the processor 21 acquires the ID read from the article by the Scanner 4 from the sorting control device 10 through the communication unit 25. The processor 21 may acquire the ID from the Scanner 4. Alternatively, the processor 21 may acquire an image from the Scanner 4 and decode a code included in the image to acquire an ID.

Upon acquiring the ID, the processor 21 specifies the chute 53 corresponding to the acquired ID with reference to the sorting designation Information. Upon specifying the chute 53, the processor 21 causes the sorter 5 to introduce the article loaded onto the tray 51 into the chute 53 through the sorter interface 26.

For example, the processor 21 causes the sorter 5 to introduce the article from the tray 51 into the chute 53 using the pusher 52 at the timing when the tray 51 reaches the chute 53. The article passes through the chute 53 and is introduced into the tote 8.

The processor 21 similarly causes the sorter 5 to introduce articles into the chute 53 until one-pass sorting is completed.

In addition, the processor 21 detects that the tote 8 has reached a predetermined amount of articles. For example, if there is volume Information associated with the code of the article, the processor 21 adds together the volumes for the respective articles that have been introduced into the tote 8, and determines/detects that the tote 8 has reached the predetermined amount of articles when the sum of the added volumes is equal to or greater than a volume threshold value set in advance based on the internal Volumetric capacity of the tote 8. In a case where there is no volume Information, or even in a case where there is volume Information, if determination is made using the volume Information together with sensor Information, the processor 21 determines/detects that the tote 8 has reached the predetermined amount of articles based on a combination of the sensor Information and the volume Information if a reflective sensor 54 attached to each chute as shown in FIG. 21 detects that articles have been stacked to a preset height or higher. Upon detecting that the tote 8 has reached the predetermined amount of articles, the processor 21 transmits a control signal (predetermined amount detection signal) indicating that the tote 8 has reached the predetermined amount of articles to the sorting control device 10. The predetermined amount detection signal is transmitted to the CTU control device 30 via the sorting control device 10.

Next, functions realized by the CTU control device 30 will be described. The functions realized by the CTU control device 30 are realized by the processor 31 executing the programs stored in an internal memory, the ROM 32, the NVM 34, or the like.

The processor 31 has a function of causing the tote 8 into which the articles have been introduced to be stored in the rack 9 based on the one-pass arrangement plan Information.

First, the processor 31 receives the one-pass arrangement plan Information from the sorting control device 10 through the communication unit 35. Upon receiving the one-pass arrangement plan Information, the processor 31 formulates an Operation plan for each CTU 7 based on the one-pass arrangement plan Information. Here, it is assumed that no tote 8 has been loaded onto the rear trays 703 of the CTU 7.

Upon formulating the Operation plan, the processor 31 moves one of the CTUs 7 to the rack 9. Upon moving the CTU 7 to the rack 9, the processor 31 causes the CTU 7 to acquire an empty tote 8 from the rack 9. Here, the processor 31 causes the CTU 7 to load empty totes 8 onto the respective rear trays 703.

The processor 71 of the CTU 7 causes the drive unit 76 to move the shuttle unit 704 to the height of the rack stage 91 where an empty tote 8 is stored. Upon moving the shuttle unit 704, the processor 71 causes the shuttle unit 704 to grip and load the empty tote 8 onto a rear tray 703. The processor 71 similarly loads empty totes 8 from the rack 9 onto the respective rear trays 703.

Upon causing the CTU 7 to acquire the empty totes 8, the processor 31 Stands by until a predetermined amount detection Signal is received.

Upon receiving the predetermined amount detection Signal, the processor 31 causes the CTU 7 to move to the Position of the tote 8 which has reached the predetermined amount of articles. For example, the processor 71 of the CTU 7 reads the code 61 of the loading table 6 or the code 81 of the tote 8 using the camera 705, and moves the CTU 7 to the front of the tote 8 that has reached the predetermined amount of articles.

Upon moving the CTU 7 to the position, the processor 31 causes the CTU 7 to acquire the tote 8 that has reached the predetermined amount of articles, and set an empty tote 8 .

The processor 31 may cause the CTU 7 to set the empty tote 8 disposed below the loading table 6 onto the loading table 6.

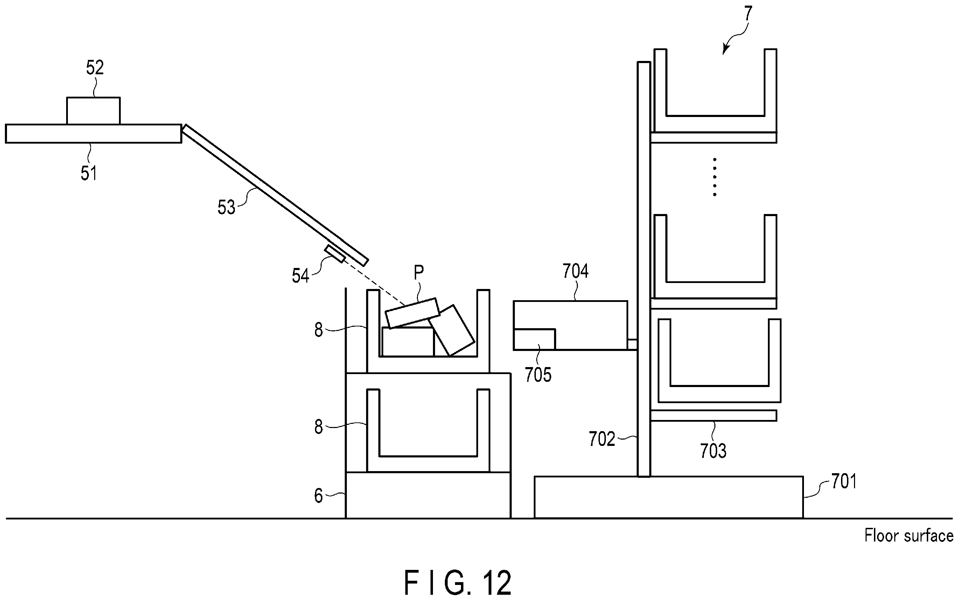

FIG. 12 shows an Operation example in which the CTU 7 acquires the tote 8 that has reached the predetermined amount of articles and sets the empty tote 8. As shown in FIG. 12, it is assumed that a predetermined tote 8 has reached the predetermined amount of articles P. It is also assumed that the loading table 6 Stores the empty tote 8 in a lower portion thereof.

The processor 71 of the CTU 7 causes the shuttle unit 704 and the drive unit 76 to acquire the tote 8 that has reached the predetermined amount of articles according to the control from the CTU control device 30. Upon acquiring the tote 8 that has reached the predetermined amount of articles, the processor 71 causes the shuttle unit 704 and the drive unit 76 to load the tote 8 that has reached the predetermined amount of articles onto one of the rear trays 703. Upon loading of the tote 8 that has reached the predetermined amount of articles onto one of the rear trays 703, the processor 71 causes the shuttle unit 704 and the drive unit 76 to set the empty tote 8 loaded onto one of the rear trays 703 on the loading table 6.

The processor 31 of the CTU control device 30 repeats the Operation described above until the tote 8 containing the predetermined amount of articles is loaded onto each of the rear trays 703 of the CTU 7.

Upon loading of the totes 8, each having reached the predetermined amount of articles, onto the respective rear trays 703 in the CTU 7, the processor 31 causes the CTU 7 to move to a predetermined rack 9. Upon movement to the predetermined rack 9, the processor 31 causes the CTU 7 to störe the totes 8 each having reached the predetermined amount of articles in the predetermined rack 9. For example, the predetermined rack 9 is a rack 9 capable of storing the totes 8.

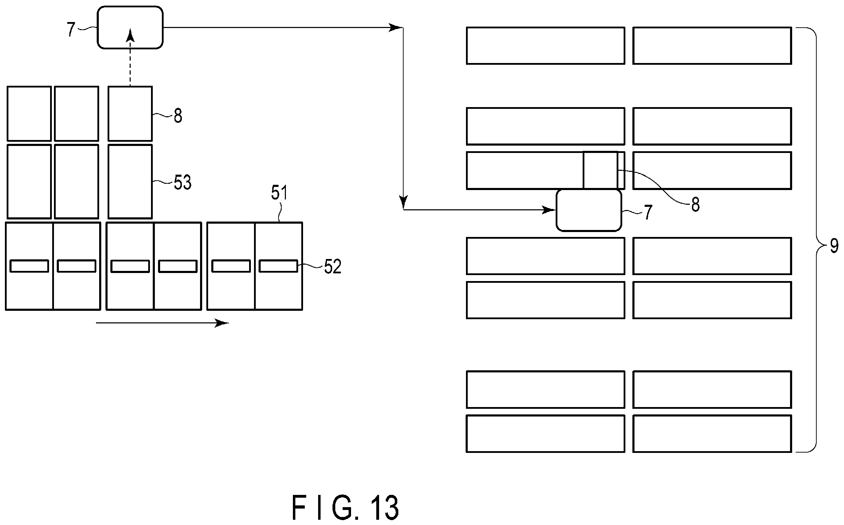

FIG. 13 shows an Operation example in which the CTU 7 moves to the predetermined rack 9 and Stores the totes 8 each having reached the predetermined amount of articles in the rack 9. As shown in FIG. 13, upon loading the totes 8 that have reached the predetermined amount of articles onto the rear trays 703, the processor 71 of the CTU 7 moves to the predetermined rack 9 by driving the drive unit 76 and the like. Upon movement to the predetermined rack 9, the processor 71 causes the shuttle unit 704 to grip the tote 8 that has reached the predetermined amount of articles from the rear tray 703.

Upon gripping of the tote 8 that has reached the predetermined amount of articles, the processor 71 causes the drive unit 76 to move the shuttle unit 704 to the height of the rack stage 91 onto which the tote 8 can be loaded while the shuttle unit 704 is gripping the tote 8. Upon movement of the shuttle unit 704, the processor 71 causes the shuttle unit 704 to load the tote 8 onto the rack stage 91.

Similarly, the processor 71 causes the shuttle unit 704 and the drive unit 76 to störe the totes 8 loaded onto the respective rear trays 703 in the predetermined rack 9.

If the totes 8 cannot be stored in one rack 9, the processor 71 may cause the totes 8 to be storecL in a plurality of racks 9 according to the control from the CTU control device 30.

The processor 31 of the CTU control device 30 causes each CTU 7 to operate in the same männer.

The processor 31 of the CTU control device 30 causes the CTU 7 to similarly störe the totes 8 that have reached the predetermined amount of articles in the rack 9 until the one-pass sorting is completed.

Next, an Operation example of the sorting System 100 will be described.

First, an Operation example of the sorting control device 10 will be described.

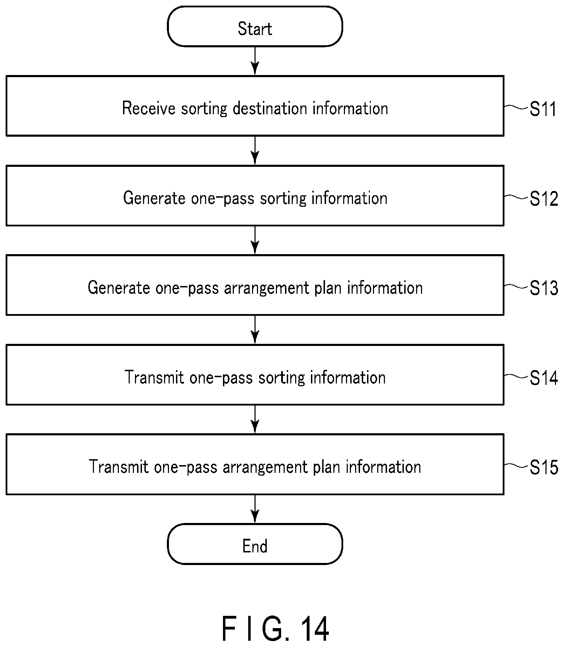

FIG. 14 is a flowchart for explaining an Operation example of the sorting control device 10.

First, the processor 11 of the sorting control device 10 receives the sorting destination Information from the host device 2 through the communication unit 15 (Sil) . Upon receiving the sorting destination Information, the processor 11 generates one-pass sorting Information based on the sorting destination Information (S12).

Upon generating the one-pass sorting Information, the processor 11 generates one-pass arrangement plan Information (S13). Upon generating the one-pass arrangement plan Information, the processor 11 transmits the one-pass sorting Information to the sorter control device 20 via the communication unit 15 (S14) .

Upon transmitting the one-pass sorting Information to the sorter control device 20, the processor 11 transmits the one-pass arrangement plan Information to the CTU control device 30 through the communication unit 15 (S15) . When the one-pass arrangement plan Information is transmitted to the CTU control device 30, the processor 11 ends the Operation.

Next, an Operation example of the sorter control device 20 will be described.

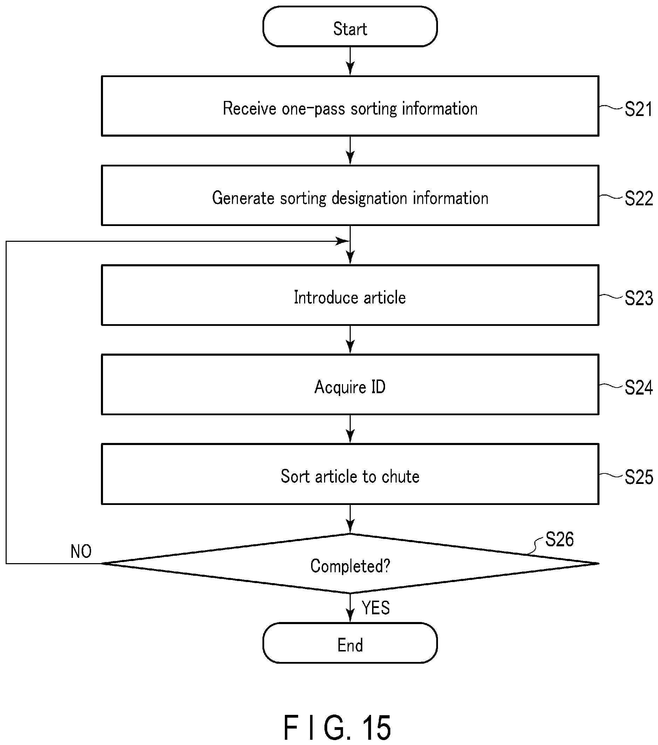

FIG. 15 is a flowchart for explaining an Operation example of the sorter control device 20.

First, the processor 21 of the sorter control device 20 receives the one-pass sorting Information from the sorting control device 10 through the communication unit 25 (S21) . Upon receiving the one-pass sorting Information, the processor 21 generates sorting designation Information based on the one-pass sorting Information (S22) .

Upon generating the sorting designation Information, the processor 21 causes the sorter 5 to receive the article from the induction 3 (S23). Upon receiving the article, the processor 21 acquires the ID of the article (S24) .

Upon acquiring the ID of the article, the processor 21 causes the sorter 5 to introduce the article into the chute 53 corresponding to the ID (S25) . Upon introducing the article into the chute 53 corresponding to the ID, the processor 21 determines whether or not the one-pass sorting has been completed (S2 6).

If it is determined that the one-pass sorting has not been completed (S26, NO), the processor 21 returns to S23 .

If it is determined that the one-pass sorting has been completed (S26, YES), the processor 21 ends the Operation.

Next, an Operation example of the CTU control device 30 will be described.

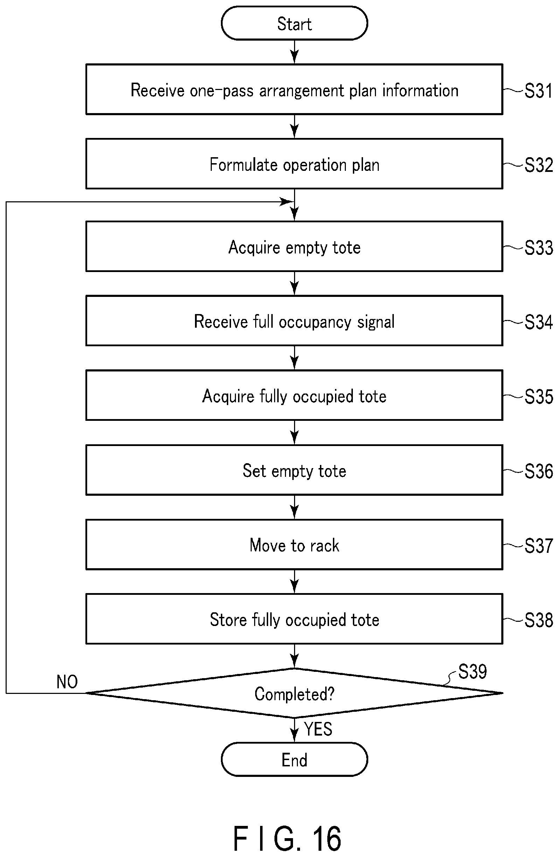

FIG. 16 is a flowchart for explaining an Operation example of the CTU control device 30.

First, the processor 31 of the CTU control device 30 receives the one-pass arrangement plan Information through the communication unit 35 (S31) . Upon receiving the one-pass arrangement plan Information, the processor 31 formulates an Operation plan based on the one-pass arrangement plan Information (S32) .

Upon formulating the Operation plan, the processor 31 causes the CTU 7 to move to the rack 9 and to load empty totes 8 from the rack 9 onto the rear trays 703 (S33). Upon causing the CTU 7 to load the empty totes 8, the processor 31 Stands by until a predetermined amount detection Signal is received.

Upon receiving the predetermined amount detection signal (S34), the processor 31 causes the CTU 7 to move to the front of the tote 8 that has reached the predetermined amount of articles, and causes the tote 8 that has reached the predetermined amount of articles to be loaded onto the rear tray 703 (S35).

Upon causing the tote 8 that has reached the predetermined amount of articles to be loaded, the processor 31 causes the CTU 7 to set an empty tote 8 loaded onto the rear tray 703 onto the loading table 6 (S36).

The processor 31 repeats the processing from S34 to S36 until the respective rear trays 703 are loaded with the totes 8 that have reached the predetermined amount of articles.

Upon loading of the totes 8 that have reached the predetermined amount of articles onto the respective rear trays 703, the processor 31 causes the CTU 7 to move to the rack 9 (S37). Upon movement to the rack 9, the processor 31 causes the CTU 7 to störe the totes 8 that have reached the predetermined amount of articles in the rack 9 (S38).

Upon storage of the respective totes 8 that have reached the predetermined amount of articles in the rack 9, the processor 31 determines whether the one-pass sorting has been completed (S39).

If it is determined that the one-pass sorting has not been completed (S39, NO), the processor 31 returns to S33.

If it is determined that the one-pass sorting has been completed (S39, YES), the processor 21 ends the Operation.

The processor 31 executes S33 to S38 for the CTUs simultaneously in parallel.

The processor 31 may cause the CTU 7 to störe in the rack 9 the totes 8 into which the articles have been introduced but which have not contained the predetermined amount of articles.

The empty totes 8 may also be loaded in advance onto the rear trays 703.

Fürther, the sorting System 100 may not include the chute 53. For example, articles may be introduced directly from the sorter 5 into totes 8.

In addition, the sorting System 100 may cause the CTU 7 to convey the totes 8 that have reached the predetermined amount of articles from the rack 9 to the roll box pallet 200. For example, the sorting System 100 conveys the totes 8 that have reached the predetermined amount of articles from the rack 9 to the roll box pallet 200 at the time of discharge processing.

The sorting System configured as described above uses the sorter to introduce articles into the totes. The sorting System also uses the CTU to störe in a height direction empty totes and totes that have reached the predetermined amount of articles on the rack that can störe the totes. Therefore, the sorting System can arrange the totes three-dimensionally. Thus, the sorting System can efficiently störe the totes.

### (Second Embodiment)

Next, a second embodiment will be described.

In the sorting System 100 of the second embodiment, the articles that have been sorted into the tote 8 are again introduced into the sorter 5 and sorted after the one-pass sorting (two-pass sorting) . This embodiment is different from the first embodiment in this respect. Accordingly, the other points are denoted by the same reference signs, and detailed descriptions thereof will be omitted.

The sorting System 100 according to the second embodiment includes a conveyor 101 (second loading table) described later. The conveyor 101 will be described in detail later.

Next, functions realized by the sorting control device 10 will be described. The functions realized by the sorting control device 10 are realized by the processor 11 executing the programs stored in an internal memory, the ROM 12, the NVM 14, or the like. The sorting control device 10 according to the second embodiment realizes the following functions in addition to the functions executed by the sorting control device 10 according to the first embodiment.

The processor 11 has a function of generating two-pass sorting Information and two-pass arrangement plan Information based on the sorting destination Information.

Here, after performing the one-pass sorting, the processor 11 causes the CTU 7 to introduce the articles from the tote 8 in the rack 9 to the sorter 5 through the chute 53, and causes the tote 8 into which the articles have been introduced from the sorter 5 to be stored again in the rack 9. That is, the processor 11 introduces the articles to the sorter 5 twice to sort the articles (two-pass sorting).

The two-pass sorting Information is Information for specifying the chute 53 into which the articles are to be introduced in the second pass. For example, the two-pass sorting Information includes the identifier of the article and the chute 53 into which the article is introduced in association with each other.

In addition, the two-pass arrangement plan Information is Information for specifying the rack 9 for storing the tote 8 into which the article has been introduced from the chute 53 in the second pass. For example, in the two-pass arrangement plan Information, the identifier of the tote 8, the identifier of the loading table 6 onto which the tote 8 is loaded, and the rack 9 for storing the tote 8 are included in association with one another.

For example, the processor 11 generates the two-pass sorting Information and the two-pass arrangement plan Information in order to sort the articles in more detail than in the first pass. Fürther, the processor 11 may generate the two-pass sorting Information and the two-pass arrangement plan Information so as to re-introduce the articles to the sorter 5 according to the order of the first pass while maintaining the order of the sorting result in the first pass.

Upon generating the two-pass sorting Information, the processor 11 transmits the two-pass sorting Information to the sorter control device 20 through the communication unit 15.

Upon generating the two-pass arrangement plan Information, the processor 11 transmits the two-pass arrangement plan Information to the CTU control device 30 through the communication unit 15.

Next, functions realized by the sorter control device 20 will be described. The functions realized by the sorter control device 20 are realized by the processor 21 executing the programs stored in an internal memory, the ROM 22, the NVM 24, or the like. The sorter control device 20 according to the second embodiment realizes the following functions in addition to the functions executed by the sorter control device 20 according to the first embodiment.

The processor 21 has a function of introducing the articles into the chute 53 based on the two-pass sorting Information.

First, the processor 21 receives the two-pass sorting Information from the sorting control device 10 through the communication unit 25. Upon receiving the two-pass sorting Information, the processor 21 generates sorting designation Information for designating the chute 53 into which each article is to be introduced based on the two-pass sorting Information.

Upon generating the sorting designation Information, the processor 21 causes the sorter 5 to introduce the article into the chute 53. Since an Operation example in which the processor 21 causes the sorter 5 to introduce the article into the chute 53 is the same as that according to the first embodiment, descriptions thereof will be omitted.

Next, functions realized by the CTU control device 30 will be described. The functions realized by the CTU control device 30 are realized by the processor 31 executing the programs stored in an internal memory, the ROM 32, the NVM 34, or the like. The CTU control device 30 according to the second embodiment realizes the following functions in addition to the functions executed by the CTU control device 30 according to the first embodiment.

The processor 31 has a function of causing the tote 8 into which the articles have been introduced to be stored in the rack 9 based on the two-pass arrangement plan Information.

The processor 31 has a function of causing the tote 8 into which the articles have been introduced to be conveyed from the rack 9 to the conveyor 101 based on the two-pass arrangement plan Information.

First, the processor 31 receives the two-pass arrangement plan Information from the sorting control device 10 through the communication unit 35. Upon receiving the two-pass arrangement plan Information, the processor 31 formulates an Operation plan for each CTU 7 based on the one-pass arrangement plan Information.

Upon formulating the Operation plan, the processor 31 moves one of the CTUs 7 to the rack 9 in accordance with the Operation plan. Upon movement to the rack 9, the processor 31 causes the CTU 7 to acquire from the rack 9 the tote 8 into which the articles have been introduced. Upon acquisition of the tote 8 from the rack 9, the processor 31 causes the CTU 7 to move to the conveyor 101. Upon movement to the conveyor 101, the processor 31 causes the CTU 7 to set the tote 8 on the conveyor 101.

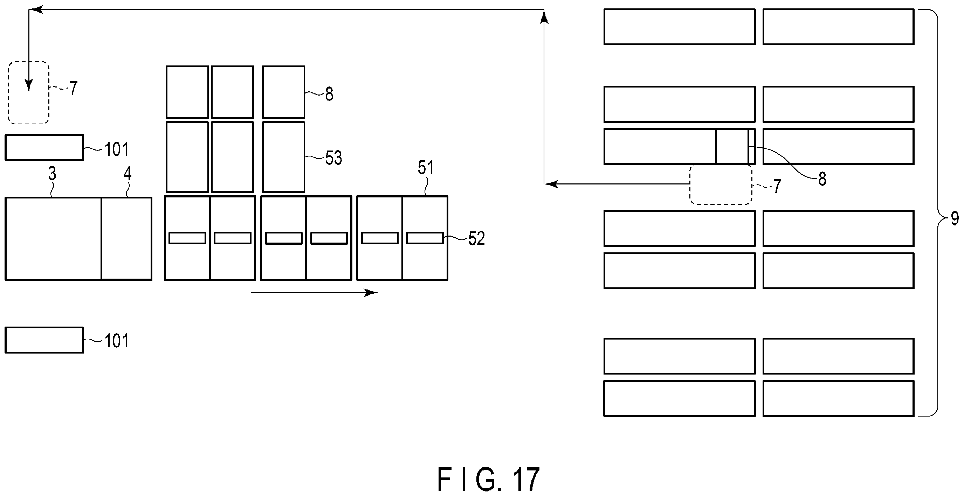

FIG. 17 shows an Operation example in which the CTU 7 sets the tote 8 from the rack 9 to the conveyor 101. As described above, the sorting System 100 includes the conveyor 101.

The conveyor 101 is disposed in the vicinity of the induction 3. Here, two conveyors 101 are disposed with the induction 3 interposed therebetween.

A conveyor 101 receives from a CTU 7 a tote 8 into which the articles have been introduced. The conveyor 101 conveys the received tote 8 in a predetermined direction. The conveyor 101 loads the tote 8 containing articles to be re-introduced into the sorter 5. The articles in the totes 8 loaded onto the conveyor 101 are sequentially introduced into the induction 3 by a robot, an operator, or the like.

Here, it is assumed that no tote 8 has been loaded onto the CTU 7.

First, the processor 71 of the CTU 7 moves to the rack 9. Upon moving to the rack 9, the processor 71 causes the drive unit 76 to move the shuttle unit 704 to the height of a rack stage 91 onto which the given tote 8 is loaded. Upon moving the shuttle unit 704, the processor 71 causes the shuttle unit 704 to grip the tote 8 on the rack stage 91. Upon gripping the tote 8, the processor 71 causes the shuttle unit 704 to load the tote 8 onto the rear tray 703.

The processor 71 similarly loads the respective rear trays 703 with totes 8.

Upon loading the rear trays 703 with the totes 8, the processor 71 moves, using the drive unit 76, to a position where the tote 8 can be introduced at one end (start end) of one of the conveyors 101. Upon moving to this position, the processor 71 causes the shuttle unit 704 to grip the tote 8 on the rear tray 703.

Upon gripping the tote 8, the processor 71 causes the shuttle unit 704 to set the gripped tote 8 onto one end of the conveyor 101.

The processor 71 similarly sets the totes 8 of the respective rear trays 703 to one end of the conveyor 101.

Upon setting the totes 8 of the respective rear trays 703, the processor 71 uses the drive unit 76 to move the totes 8 to a position where the totes 8 can be acquired from the other end (terminal end) of the conveyor 101.

Upon moving to that position, the processor 71 causes the shuttle unit 704 to grip an empty tote 8 from the other end of the conveyor 101 and load it onto the rear tray 703.

The processor 71 similarly loads empty totes 8 onto the respective rear trays 703.

Upon loading the empty totes 8 onto the respective rear trays 703, similarly to the first embodiment, the processor 31 causes the CTU 7 to acquire totes 8 that have reached the predetermined amount of articles from the loading table 6 and set empty totes 8 onto the loading table 6. In addition, the processor 31 causes the CTU 7 to störe the totes 8 that have reached the predetermined amount of articles in the rack 9.

The processor 31 of the CTU control device 30 operates each of the CTUs 7 in the same männer until the two-pass sorting is completed.

Next, an Operation example of the sorting System 100 will be described.

First, an Operation example of the sorting control device 10 will be described.

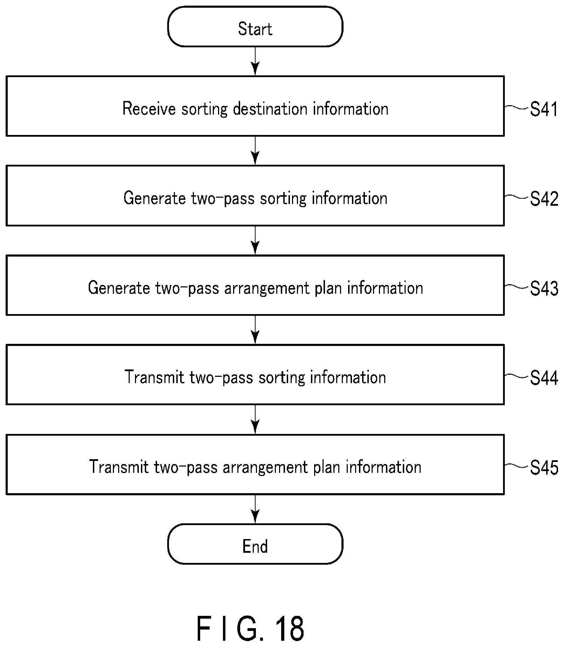

FIG. 18 is a flowchart for explaining an Operation example of the sorting control device 10.

First, the processor 11 of the sorting control device 10 receives the sorting destination Information from the host device 2 through the communication unit 15 (S41) . Upon receiving the sorting destination Information, the processor 11 generates two-pass sorting Information based on the sorting destination Information (S42) .

Upon generating the two-pass sorting Information, the processor 11 generates two-pass arrangement plan Information (S43) . Upon generating the two-pass arrangement plan Information, the processor 11 transmits the two-pass sorting Information to the sorter control device 20 through the communication unit 15 (S44) .

Upon transmitting the two-pass sorting Information to the sorter control device 20, the processor 11 transmits the two-pass arrangement plan Information to the CTU control device 30 via the communication unit 15 (S45) . Upon transmitting the two-pass arrangement plan Information to the CTU control device 30, the processor 11 ends the Operation .

Next, an Operation example of the sorter control device 20 will be described.

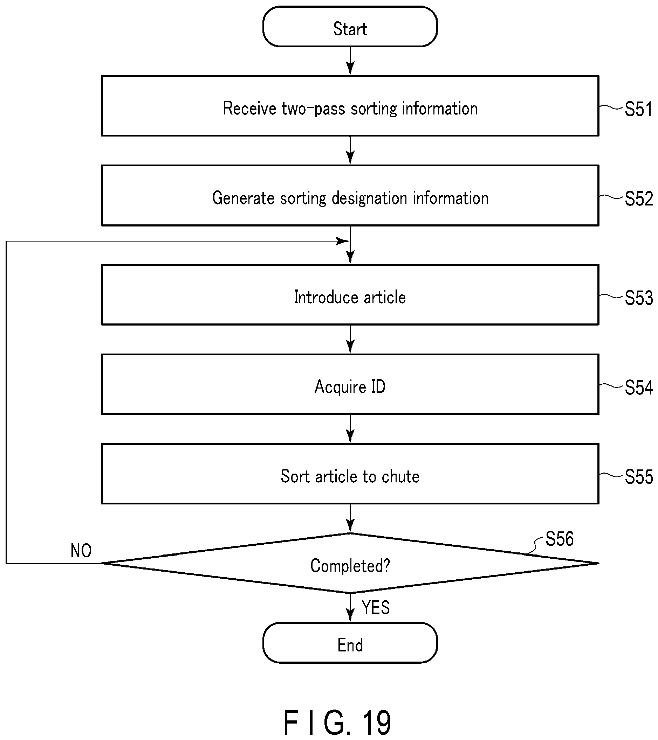

FIG. 19 is a flowchart for explaining an Operation example of the sorter control device 20.

First, the processor 21 of the sorter control device 20 receives the two-pass sorting Information from the sorting control device 10 through the communication unit 25 (S51) . Upon receiving the two-pass sorting Information, the processor 21 generates sorting designation Information based on the two-pass sorting Information (S52) .

Upon generating the sorting designation Information, the processor 21 causes the sorter 5 to receive the article from the induction 3 (S53) . Upon receiving the article, the processor 21 acquires the ID of the article (S54) .

Upon acquiring the ID of the article, the processor 21 causes the sorter 5 to introduce the article into the chute 53 corresponding to the ID (S55) . Upon introducing the article into the chute 53 corresponding to the ID, the processor 21 determines whether or not the two-pass sorting has been completed (S56) .

If it is determined that the two-pass sorting has not been completed (S56, NO), the processor 21 returns to S53.

If it is determined that the two-pass sorting has been completed (S56, YES), the processor 21 ends the Operation.

Next, an Operation example of the CTU control device 30 will be described.

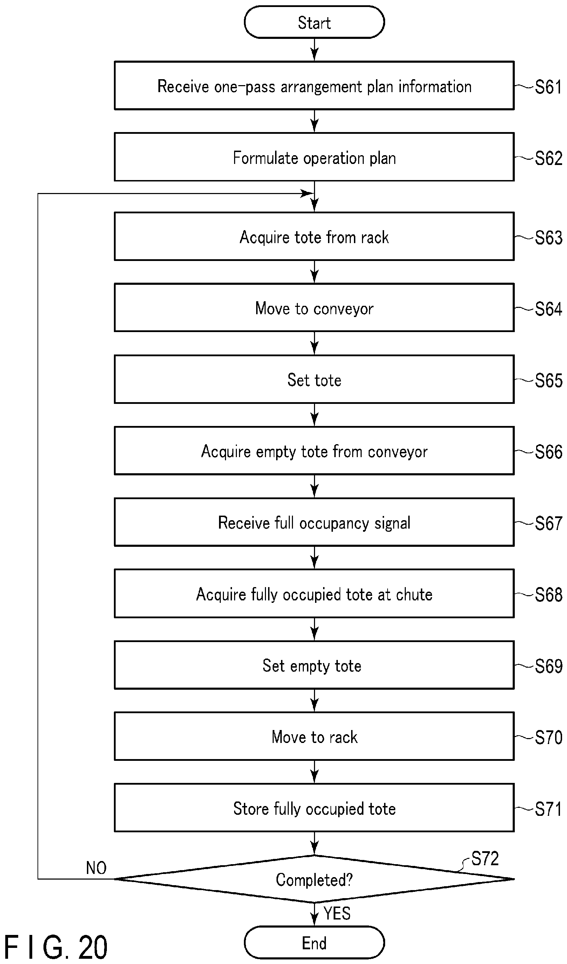

FIG. 20 is a flowchart for explaining an Operation example of the CTU control device 30.

First, the processor 31 of the CTU control device 30 receives the two-pass arrangement plan Information through the communication unit 35 (S61) . Upon receiving the two-pass arrangement plan Information, the processor 31 formulates an Operation plan based on the two-pass arrangement plan Information (S62) .

Upon formulating the Operation plan, the processor 31 causes the CTU 7 to move to the rack 9 and load the totes 8 into which articles has been introduced onto the respective rear trays 703 from the rack 9 (S63). Upon loading the totes 8 into the CTU 7, the processor 31 causes the CTU 7 to move to the conveyor 101 (S64) .

Upon movement to the conveyor 101, the processor 31 causes the CTU 7 to set each tote 8 at one end of conveyor 101 (S65) . Upon setting each tote 8, the processor 31 causes the CTU 7 to load the respective rear trays 703 with empty totes 8 from the other end of the conveyor 101 (S66) .

Upon loading the empty totes 8, the processor 31 Stands by until a predetermined amount detection Signal is received.

Upon receiving the predetermined amount detection Signal (S67) , the processor 31 causes the CTU 7 to move to the front of the tote 8 that has reached the predetermined amount of articles on the loading table 6, and causes the tote 8 that has reached the predetermined amount of articles to be loaded onto the rear tray 703 (S68).

Upon causing the tote 8 that has reached the predetermined amount of articles to be loaded, the processor 31 causes the CTU 7 to set an empty tote 8 loaded onto the rear tray 703 on the loading table 6 (S69) .

The processor 31 repeats the processing from S67 to S69 until the respective rear trays 703 are loaded with the totes 8 that have reached the predetermined amount of articles .

Upon loading of the totes 8 that have reached the predetermined amount of articles onto the respective rear trays 703, the processor 31 causes the CTU 7 to move to the rack 9 (S70). Upon movement to the rack 9, the processor 31 causes the CTU 7 to störe the totes 8 that have reached the predetermined amount of articles in the rack 9 (S71) .

Upon storage of the respective totes 8 that have reached the predetermined amount of articles in the rack 9, the processor 31 determines whether the two-pass sorting has been completed (S72) .

If it is determined that the two-pass sorting has not been completed (S72, NO), the processor 31 returns to S63 .

If it is determined that the one-pass sorting has been completed (S69, YES) , the processor 21 ends the Operation.

The processor 31 executes S63 to S71 for the CTUs simultaneously in parallel.

In addition, after the two-pass sorting has been completed, the sorting System 100 may cause the CTU 7 to convey the totes 8 that have reached the predetermined amount of articles from the rack 9 to the roll box pallet 200. For example, the sorting System 100 conveys the totes 8 that have reached the predetermined amount of articles from the rack 9 to the roll box pallet 200 at the time of discharge processing.

Furthermore, the CTU 7 may set the tote 8 into which the article has been introduced from the rack 9 to a predetermined table or a floor surface. In this case, the sorting System 100 need not include the conveyor 101.

Fürther, the sorting System 100 may sort the articles again after the two-pass sorting is completed (three-pass sorting). The number of times of sorting performed by the sorting System 100 is not limited to a specific number.

In the sorting System configured as described above, the articles sorted by one-pass sorting are again introduced into the sorter and sorted. As a result, the sorting System can sort the articles in more detail. For example, if the sorting System comprises n chutes, the articles can be sorted into n x n sorting destinations.

While several embodiments have been described, these embodiments have been presented by way of example and are not intended to limit the scope of the invention. The novel embodiments described herein can be implemented in a variety of other forms; furthermore, various omissions, substitutions, and changes can be made without departing from the spirit of the invention. The embodiments and their modifications are covered by the accompanying Claims and their equivalents, as would fall within the scope and gist of the inventions.

## Claims

1. A System comprising a sorter and an automatic conveying device,
the sorter comprising:
a first tray onto which an article is to be loaded; and
an introducing mechanism configured to introduce the article from the first tray into a Container,
the automatic conveying device comprising:
a gripping mechanism configured to grip the Container;
a driving mechanism configured to move the gripping mechanism in a vertical direction; and
a processor configured to
cause the gripping mechanism to acquire the Container into which the article has been introduced from the sorter, and
cause the gripping mechanism and the driving mechanism to störe the Container into which the article has been introduced from the sorter in a rack for storing the Containers in a height direction.

2. The System according to Claim 1, further comprising a first loading table configured to support the Container at a position where the article is introduced by the introducing mechanism, wherein
the automatic conveying device includes a second tray onto which the Container is to be loaded, and
the processor is configured to, after acquiring from the first loading table the Container into which the article has been introduced from the sorter, cause the gripping mechanism to set an empty Container loaded onto the second tray on the first loading table.

3. The System according to Claim 1 or 2, wherein the processor is configured to, if the Container has reached a predetermined amount of articles introduced by the introducing mechanism, cause the gripping mechanism to acquire the Container into which the articles have been introduced from the sorter.

4. The System according to Claim 2, wherein the processor is configured to cause the gripping mechanism and the driving mechanism to acquire the empty Container from the rack and load the empty Container onto the second tray.

5. The System according to Claim 2, wherein the first loading table includes a guide configured to maintain a Position of the Container.

6. The System according to any one of Claims 1 to 5, further comprising a second loading table configured to load the Container storing the article to be re-introduced into the sorter, wherein
the processor is configured to
cause the gripping mechanism and the driving mechanism to acquire, from the rack, the Container into which the article has been introduced from the sorter, and
cause the gripping mechanism to load the Container onto the second loading table.

7. The System according to Claim 6, wherein the processor is.configured to cause the gripping mechanism to acquire the empty Container from the second loading table.

8. The System according to Claim 6 or 7, wherein the second loading table is a conveyor.

9. The System according to any one of Claims 1 to 8, wherein the rack includes a plurality of rack stages.
